Europäisches Patentamt

European Patent Office

Office européen des brevets

(11) Publication number: 0 312 103
A2

## (12) EUROPEAN PATENT APPLICATION

(21) Application number: 88117145.8

(22) Date of filing: 14.10.88

(51) Int. Cl.⁴: G11B 33/14 , G11B 19/20 , G11B 25/04

(30) Priority: 16.10.87 JP 261184/87

(43) Date of publication of application:
19.04.89 Bulletin 89/16

(84) Designated Contracting States:
DE FR GB

(71) Applicant: KABUSHIKI KAISHA TOSHIBA
72, Horikawa-cho Saiwai-ku
Kawasaki-shi Kanagawa-ken 210(JP)

(72) Inventor: Mikada, Masako c/o Patent Division
Kabushiki Kaisha Toshiba !-1, Shibaura
1-chome
Minato-ku Tokyo 105(JP)

(74) Representative: Henkel, Feiler, Hänzel &
Partner
Möhlstrasse 37
D-8000 München 80(DE)

(54) A disc rotating apparatus of a magnetic disc apparatus.

(57) In a magnetic disc apparatus, a disc rotating apparatus to rotatably drive magnetic discs comprises a support spindle (42) as the stator and a motor case (44) as the rotor which is supported by the spindle (42) through a couple of bearings (48, 50) and to which the magnetic discs (56, 58, 60, 62) are attached. A couple of magnetic fluid sealing devices (84, 86) are arranged adjacent to the bearings (48, 50) and used to perform a sealing function as a part of a disc enclosure enclosing the magnetic discs (56, 58, 60, 62). The seal retainers (92) of the magnetic fluid sealing devices (84) are secured to the support spindle (42).

F I G. 1

EP 0 312 103 A2

Xerox Copy Centre

## A disc rotating apparatus of a magnetic disc apparatus

This invention relates to a disc rotating apparatus for a magnetic disc apparatus and more particularly to a disc rotating apparatus using a spindle motor.

In magnetic disc apparatuses, and in hard disc apparatuses in particular, the magnetic head is arranged to do what is referred to as floating on the disc without contact with the disc to prevent the disc from wearing. The distance between the magnetic head and the disc is usually smaller than the size of dust particles. Therefore, if dust adheres to the disc surface, this may leads to "head crash", which will results in troubles of the hard disc apparatus. To prevent this, in hard disc apparatuses, the hard disc is airtightly enclosed by a disc enclosure.

The hard disc apparatus is equipped with a spindle motor for the disc rotating apparatus. The spindle motor is located out of the disc enclosure. The spindle is supported by bearings mounted in the motor case. The disc is connected to one end of the spindle that passes through the disc enclosure. The bearings, being moving parts, are liable to produce dust. The spindle motor is provided with a sealing device using a magnetic fluid, which seals up that part of the disc enclosure which the spindle bores through, thus preventing dust from entering into the inside of the disc enclosure.

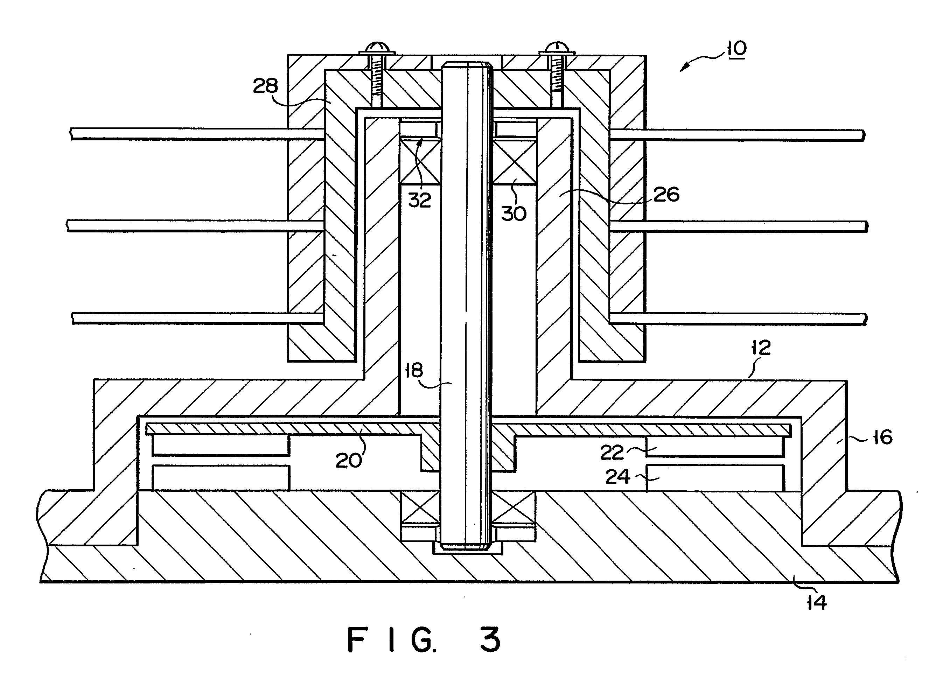

Fig. 3 shows a conventional disc rotating apparatus built in a hard disc apparatus. Spindle motor 10 used in the conventional disc rotating apparatus has motor case 12 which is mounted to the hard disc apparatus with the insertion of base plate 14. Motor case 12 is a stepped cylindrical body having formed at its center a protruding section. Accommodated in large-diameter section 16 of motor case 12 are disc-shaped wheel 20 fixed to spindle 18, rotor coil 22 secured to the side face of wheel 20 and stator coil 24. Cylindrical hub 28 is fitted over small-diameter protruding section of the motor case in such a way as to surround the small-diameter section. Hub 28 is attached to the end portion of spindle 18 protruding from motor case 12. Three discs are mounted onto the outer periphery of hub 28, located above large-diameter section 16 of the motor case.

Sealing device 32 using a magnetic fluid is fitted adjacent to bearing 30 and onto the end portion of small-diameter section of motor case 12. Sealing device 32 and motor case 12 constitute a part of the disc enclosure. As shown in Fig, 4, conventional magnetic fluid sealing device 32 incorporates seal retainer 34, in which magnetic fluid 36 is contained. Seal retainer 34 is fitted at outer periphery thereof to the inner periphery of small-diameter section 26 of the motor case. There is provided a predetermined amount of clearance between the inner periphery of seal retainer 34 and spindle 18. The clearance has formed therein a sealing film of magnetic fluid 36, providing airtight sealing.

There is a requirement for a more compact hard disc apparatus with greater storage capacity. A possible answer to this demand is use of an increased number of hard discs. In a conventional disc rotating apparatus as described above, however, a disc-shaped wheel of a spindle motor is disposed in parallel relationship with hard discs, leaving only a limited space for mounting discs, so that the number of discs cannot be increased. Therefore, an improved version of the disc rotating apparatus may be one which adopts a new type of spindle motor having the spindle as the stator and the motor case as the rotor. If such a construction is used, there arises a problem for conventional magnetic fluid sealing devices that the magnetic fluid scatters and the sealing function is lost. Hence, so long as a conventional disc rotating apparatus is used, it is difficult to make a compact-size hard disc apparatus with a greater storage capacity.

Accordingly, it is an object of the present invention to provide an improved disc rotating apparatus that has solved the problem described above in order to obtain a hard disc apparatus reduced in size and increased in storage capacity.

In order to achieve the above object, the disc rotating apparatus according to this invention comprises a motor including a support spindle fixed to the main body of the magnetic disc apparatus and serving as the stator and a motor case rotatably supported by the support spindle serving as the rotor on which magnetic discs are mounted; and a couple of magnetic fluid sealing devices disposed between the support shaft and the motor case and performing a sealing function. The bearings are located between those magnetic fluid sealing devices, and the seal retainers of the magnetic fluid sealing devices are tight-fitted to the support spindle.

This invention can be more fully understood from the following detailed description when taken in conjunction with the accompanying drawings, in which:

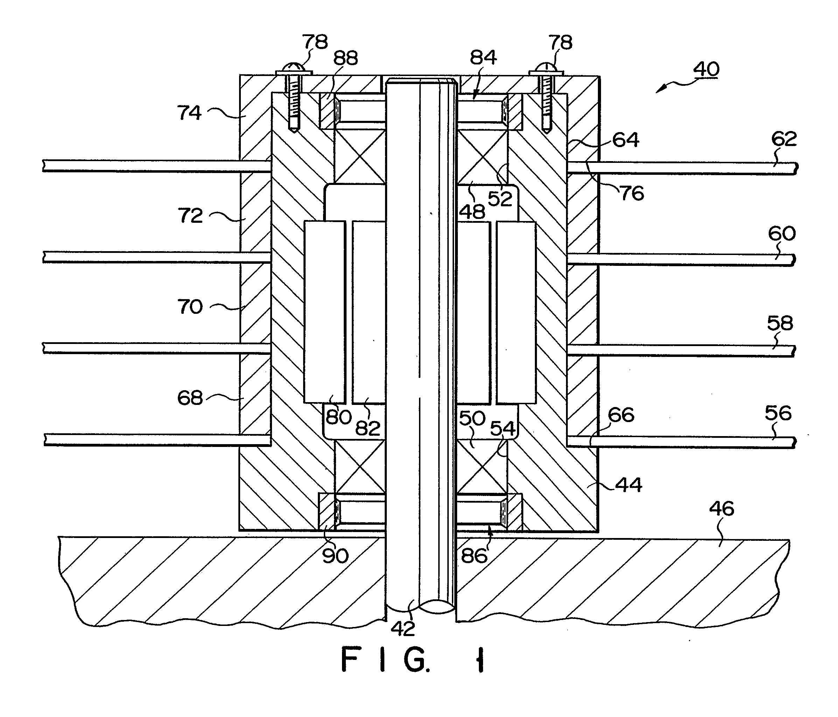

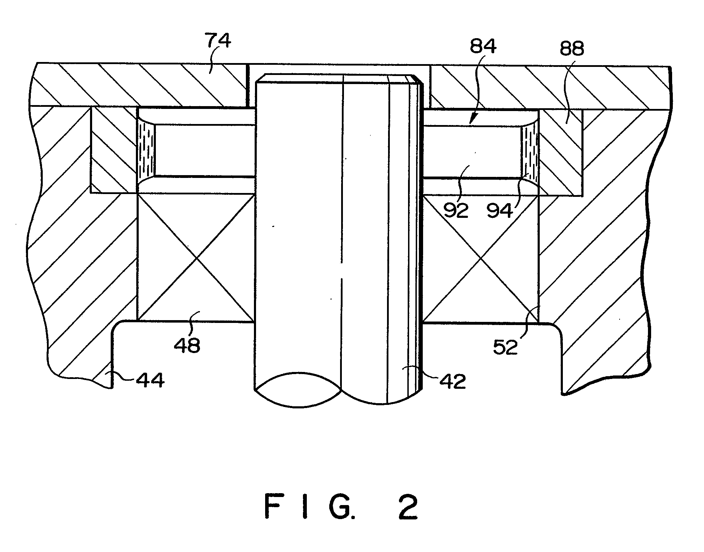

Figs. 1 and 2 are the views showing the disc rotating apparatus according to an embodiment of this invention;

Fig. 1 is a sectional view schematically showing the disc rotating apparatus;

Fig. 2 is a fragmentary sectional view of the sealing device thereof;

Figs, 3 and 4 are views of a conventional disc rotating apparatus;

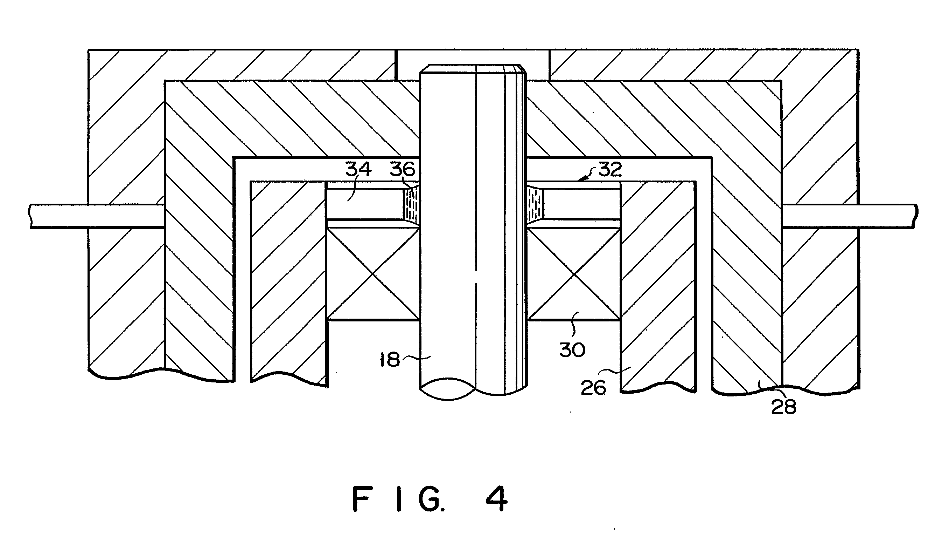

Fig. 3 is a schematic sectional view similar to Fig. 1; and Fig. 4 is a fragmentary sectional view of the sealing device similar to Fig. 2.

With reference to the accompanying drawings, description will now be made of an embodiment of the disc rotating apparatus of a magnetic disc apparatus according to this invention. Fig. 1 shows the disc rotating apparatus built in a hard disc apparatus. This disc rotating apparatus is equipped with spindle motor 40. Spindle motor 40 comprises spindle 42 as the stator and case 44 serving as the rotor rotating about spindle 42 and having mounted thereon hard discs. Spindle 42 as the stator is at one end fixed to base plate 46.

Cylindrical case 44, having a length corresponding to the protruding length of spindle 42, is supported by spindle 42 through bearings 48 and 50 disposed at the distal and proximal end portions of spindle 42. Bearing mounting portions 52 and 54 which are formed with reduced inside diameter at the inner periphery of case 44. Bearings 48 and 50 are at their outer peripheries tight-fitted to bearing mounting portions 52 and 54, respectively. Through those bearings 48 and 50 case 44 as the rotor is rotatably supported by spindle 42.

Four discs 56, 58, 60 and 62 are mounted to the outer periphery of case 44. Case 44 has outer-peripheral surface 64 coaxial with the bearing mounting portions at the inner periphery thereof and also has step face 66 extending perpendicularly to the case axis. Disc 56 on one side face of it contacts step face 66 and on the other side face contacts a side face of spacer 68. Discs 56, 58, 60 and 62 are arranged mutually parallel and separated by a predetermined distance from one another with spacers 68, 70 and 72 inserted between them. That side face of disc 62 opposite to its side face in contact with spacer 72 contacts end face 76 of retainer cap 74, which is attached to the end portion of case 44. Retainer cap 74 is secured to case 44 with screws 78. Thus, discs 56, 58, 60 and 62 are clamped between step face 66 and end face 76 of retainer cap 74.

Rotor coil 80 is attached to the middle portion, which has an inside diameter greater than bearing mounting portions 52 and 54 and located between bearing mounting portions 52 and 54. On the other hand, stator coil 82 is attached to the middle portion of spindle 42 and is placed opposing to rotor coil 80 in such a way that there is provided a specified clearance between coils 80 and 82.

Case 44 has magnetic fluid sealing devices 84 and 86 adjacent to bearings 48 and 50, respectively, and on the closer sides of the bearings to the end faces of the case. Ring member 88 and 90 made of magnetic material are fitted to the end portions, respectively, at the inner periphery of case 44.

Sealing devices 84 and 86 are identical in structure. For the sake of simplicity, only device 84 will be described in detail, with reference to Fig. 2. Magnetic fluid sealing device 84 comprises seal retainer 92 which contains magnetic fluid 94. Seal retainer 92 has two magnetic discs, for example, which are connected together by a cylindrical connecting member disposed at the inner peripheral area thereof. The outer periphery of seal retainer 92 is diametrically open. Seal retainer 92 is at its inner periphery tight-fitted to spindle 42. The outer periphery of seal retainer 92, that is, the peripheral edges of the two magnetic discs are seperated by a specified distance from ring material 88. Magnetic fluid 94 fills the clearance between the outer periphery of seal retainer 92 and ring material 88 to form a sealing film, and the sealing film of magnetic fluid performs a sealing function.

The operation of the disc rotating apparatus according to this invention will now be described.

In the hard disc apparatus, when an instruction to write or read data is sent from the host computer (not shown), discs 56, 58, 60 and 62 are driven and rotated by the disk rotating apparatus. In response to this instruction, rotor coil 80 and stator coil 82 are energized in spindle motor 40 and case 44 is driven and rotated about spindle 42 fixed to base plate 46. Through this motion, discs 56, 58, 60 and 62 fitted to case 44 are driven to rotate. The magnetic heads (not shown) move in the radial direction of the rotating discs, make seek motions and write data in a specified track or read data from a specified track.

Magnetic fluid sealing devices 84 and 86 have their seal retainers fitted to stationary spindle 42. In sealing device 84, a part of the magnetic fluid out of seal retainer 92 adheres to ring material 88 to form the sealing film. While spindle motor 40 rotates, seal retainer 92 are stationary. Therefore, magnetic fluid 94 does not scatter and keeps the sealing film formed as the magnetic fluid is in stable contact with ring materials 88. By the seal film formed between stationary spindle 42 and rotating case 44, the clearance between them is sealed airtightly. Magnetic fluid sealing devices 84 and 86 constitute a part of the disc enclosure. Since bearings 48 and 50 are located between magnetic fluid sealing devices 84 and 86, the sealing devices securely prevent dust produced by bearings 48 and 50 from entering into the inside of the disc enclosure and adhering to the hard discs.

In a hard disc apparatus incorporating the disc rotating apparatus according to this invention, spindle 42 is stationary and case 44 is rotated, and therefore, the hub and the wheel of the conventional apparatus in Fig. 3 have been done away with. This makes it possible to increase the number of discs mounted. Since the disc rotating apparatus according to this invention uses improved magnetic fluid sealing devices, the magnetic fluid does not scatter, so that a secure sealing function can be obtained.

In an improved magnetic disc apparatus incorporating the disc rotating apparatus of the present invention, the possibility of trouble resulting from dust adhering to the disc has been precluded, making it possible to produce the magnetic disc apparatuses in reduced size but with increased storage capacity.

## Claims

1. A disc rotating apparatus built in a magnetic disc apparatus and used to rotatably drive magnetic discs airtightly enclosed by a disc enclosure, comprising a motor having a stator fixed to the main body of the magnetic disc apparatus and a rotor to which said magnetic discs are attached, and magnetic fluid sealing means disposed between said stator and said rotor and constituting a part of the disc enclosure, characterized in that the stator includes a support spindle (42) fixed to the main body (46) of the magnetic head apparatus; in that the rotor includes a motor case (44) rotatably supported by the support spindle (42) through a bearing device (48, 50); and in that the magnetic fluid sealing means (84, 86) includes a magnetic fluid sealing device (84) being disposed between the support spindle (42) and the motor case (44) and having a seal retainer (92) attached to the support spindle (42) and a magnetic fluid (94) being contained in the seal retainer (92) and forming a sealing film between the seal retainer (92) and the motor case (44), said magnetic fluid sealing means (84, 86) constituting a part of the disc enclosure.

2. The disc rotating apparatus according to claim 1, characterized in that said stator includes a stator coil (82) mounted on the support spindle (42), and said rotor includes a rotor coil (80) attached to the motor case (44), the rotor coil (80) being opposed to the stator coil (82), the stator coil (82) and the rotor coil (80) being disposed such that they define a predetermined distance therebetween in the direction perpendicular to the axis of the support spindle (42).

3. The disc rotating apparatus according to claim 1, characterized in that said magnetic fluid sealing means (84, 86) includes a couple of magnetic fluid sealing devices (84, 86), said couple of magnetic fluid sealing devices (84, 86) having put the bearing device (48, 50) therebetween.

4. The disc rotating apparatus according to claim 3, characterized in that said bearing device (48, 50) includes a couple of bearings (48, 50), said couple of magnetic fluid sealing devices (84, 86) being arranged each adjacent to said couple of bearings (48, 50) and with one sealing device (86) located at the proximal end portion of the support shaft (42) and the other sealing device (84) at the distal end portion.

5. The disc rotating apparatus according to claim 1, characterized in that said motor case (44) has a cylindrical configuration coaxial with the axis of the support spindle (42), said motor case (44) having a ring material (88) at its inner periphery and at a position corresponding to said magnetic fluid sealing device (84), said magnetic fluid (94) forming an annular sealing film between the ring material (88) and the seal retainer (92).

F I G. 1

FIG. 2

FIG. 3

F I G. 4

EP 0 312 103 A2